# EUROPEAN PATENT SPECIFICATION

(11) **EP 0 720 522 B1**
(45) Date of publication and mention of the grant of the patent: **07.01.1998**
(21) Application number: 94927648.9
(22) Date of filing: 26.09.1994
(51) Int. Cl.: B25G 1/01, B25G 1/10

(54) **HANDLES FOR DIGGING TOOLS**
GRIFFE FÜR GRABEGERÄTE
MANCHES POUR OUTILS DE CREUSEMENT

(30) Priority: 24.09.1993 GB 9319755; 27.10.1993 GB 9322145
(43) Date of publication of application: 10.07.1996
(73) Proprietor: TRUE TEMPER LTD., Cork (IE)
(72) Inventor: O'BRIEN, Dermod, Wilmer, Carrigrohane, County Cork (IE)
(74) Representative: Cummings, Sean Patrick
(86) International application number: EP9403199
(87) International publication number: WO9508420

(56) References cited:
- EP-A- 0 353 919
- WO-A-91/17647
- DE-A- 3 148 689
- FR-A- 2 301 340
- GB-A- 896 742
- GB-A- 910 403
- GB-A- 1 327 222
- GB-A- 2 071 809
- US-A- 4 768 406

## Description

This invention relates to tool handles as defined in the pre-characterising portion of claims 1, 4 and 5, respectively, particularly handles for digging tools such as spades, forks or shovels. The pre-characterising portion of claims 1,4 and 5 is based on the disclosure of the document GB-A-896 742. The invention also encompasses a digging tool fitted with such handles.

Digging tools take many forms but generally comprise an elongate shaft having a head at one end and a handle at the other end. Such tools are widely used in horticulture, agriculture, construction and mining.

The shaft is commonly of wood, steel, plastics or fibre-reinforced composites and, depending upon the material, may be tubular or solid. The head is adapted to suit the purpose of the tool, and so, in a fork, includes a plurality of tines or prongs or, in a spade, includes a blade.

The handle may be simply an extension of the shaft but, for ease of use, usually includes a generally cylindrical hand grip which is oriented transversely with respect to the shaft. This orientation facilitates driving the head of the `tool into the material being dug, such as soil, sand or gravel. To orient the hand grip transversely, the handle may be T-shaped, with the hand grip forming the cross-bar of the T. However, the handle is more commonly D-shaped, with the hand grip supported by a Y-shank i.e. supported between two support members which splay apart from the handle end of the shaft.

Digging with a hand tool for long periods is physically gruelling and involves numerous repetitive movements. With each movement, the user's hand may slip slightly on the hand grip, often resulting in painful blisters which hinder use of the tool and so reduce working efficiency. Worse, if blistering is serious, the user may have to stop using the tool until the blisters heal.

In an effort to reduce the problem of blistering, at least one tool manufacturer has adopted a cushioned hand grip in which a sleeve of soft and resilient foam rubber or plastics is bonded to a hard core. The core provides structural strength whilst the foam layer surrounds the core to improve the security of the user's grip on the handle. To this end, the foam layer has a rough surface texture which increases friction with the user's skin, and is soft enough to conform to the shape of the user's hand as the user grasps the hand grip.

Though an improvement over previous non-cushioned hand grips in that blistering is much reduced, the cushioned hand grip introduces problems of its own. Specifically, a digging operation involves considerable movement of the user's arms and, clearly, freedom of arm movement is extremely important. It is unfortunate, therefore, that the cushioned hand grip places extra load on the user's arm and particularly on his or her wrist. As the cushion substantially prevents movement of the user's hand with respect to the hand grip, the user's wrist has to flex repeatedly through a wide range of movement while digging and may assume unnatural and stressful positions in so doing. This promotes fatigue and, at worst, may damage the user's muscles, ligaments or tendons.

A partial solution to the problem of fatigue or injury is to make the hand grip pivotable with respect to the remainder of the handle. Examples of pivotable hand grips are disclosed in GB-A-896 742 and WO-A-91/17647. Both of these arrangements employ a D-shaped handle having a rigid cylindrical hand grip mounted transversely for pivotal movement. The teaching of GB-A-896742 is perhaps the more relevant to the present invention in that it discloses a handle for a digging tool, the handle comprising first and second spaced support members, a core supported by and connecting the support members, and a tubular rigid sleeve pivotable about the core.

However, neither GB-A-896 742 nor WO-A-91/17647 employ a cushioned hand grip and, indeed, it is believed that no-one has marketed a digging tool having a cushioned and pivotable hand grip. This invention results from our efforts to solve the problems outlined above and provides, for the first time, a commercially-practical digging tool having a cushioned, pivotable hand grip. The invention is particularly concerned with ensuring the structural strength of a handle having a cushioned, pivotable hand grip.

From one aspect, therefore, the invention is characterised in that the sleeve has a resilient gripping surface and is axially located with respect to the core, the sleeve having an interlocking formation adapted to interlock with a complementary interlocking formation on the core.

It is not essential to this aspect of the invention that there are first and second support members, although such a configuration is much preferred.

Advantageously, the interlocking formations are adapted to allow snap-fit interconnection of the sleeve and the core. One set of interlocking formations may be provided by a collet associated with the sleeve, the collet preferably being a separate component received by or otherwise attached to the sleeve.

There may be first and second cores, each core being a spigot associated with a respective one of first and second support members, with the sleeve being axially located with respect to each core.

The facility for pivotal movement of the hand grip allows the user's arm, and particularly the user's wrist, to adopt whatever positions may be most natural and comfortable during a digging operation. This reduces the risk of fatigue or injury. However, unlike previous handle designs, freedom of movement does not depend upon slippage of the user's hand with respect to the hand grip; the user's hand remains fixed in relation to the hand grip and so blisters are minimised. The resilience of the layer defining the gripping surface also provides a shock-absorbing effect and further improves the non-slip characteristics of the hand grip.

For optimum structural strength, the invention is characterised from a second aspect in that the sleeve has a resilient gripping surface and in that the core is axially located with respect to the first and second spaced support members, the core acting in tension to prevent the support members separating from one another.

From a third aspect also intended to optimise structural strength, the invention is characterised in that the handle comprises first and second cores, each core being associated with a respective one of the first and second support members, in that the sleeve is pivotable about the cores, in that the sleeve has a resilient gripping surface and in that the cores are connected by a tensile member acting in tension to prevent the support members separating from one another.

Structural strength is further enhanced if, as is preferred, respective ends of the sleeve bear against the first and second support members, with the sleeve acting in compression to separate the support members.

The core can be integral with the support member or may be attached to the support member, for example with the core being received in an opening in the support member. Alternately, the core may be tubular and receive a male portion of the support member.

The core can be attached to the support member by plastic deformation of the core, with the core being crimped, upset or peened.

The gripping surface preferably has a high friction characteristic which minimises side-to-side slippage of the user's hand on the hand grip; it will be noted that such slippage could occur despite the pivoting facility. Further, the gripping surface ensures that the frictional force between the user's hand and the gripping surface always exceeds the frictional force resisting pivoting of the hand grip. This ensures that, if movement is called for during a digging operation, the hand grip will pivot rather than allow slippage of the user's hand.

The gripping surface may be integral with the sleeve, the sleeve having non-uniform rigidity being relatively rigid inwardly towards the core and being relatively flexible outwardly to define the resilient gripping surface.

The resilient layer is suitably a layer of foam rubber or plastics material such as neoprene, bonded or otherwise fitted to the sleeve. The foam material constituting the resilient layer may be of non-uniform density, having a relatively large-celled internal structure and a relatively small-celled outer surface region.

The invention also resides in a digging tool fitted with or integral with the handle of the invention.

In order that this invention may be clearly understood, reference is made to the following detailed description of preferred embodiments, and to the accompanying drawings. Whilst these embodiments are presently preferred and are described for the purposes of illustrating this invention, it will be understood that the invention is not limited to the specific arrangements disclosed.

In the drawings:
Figure 1 is a part-sectioned front view of the upper end of a digging tool, showing a handle constructed in accordance with this invention;
Figure 2 is a side view corresponding to Figure 1;
Figure 3 is an enlarged cross-sectional detail view illustrating a part of the handle shown in Figures 1 and 2;
Figure 4 is an enlarged cross-sectional detail view illustrating a further embodiment of the invention in which a collet forming part of the sleeve engages with a spigot associated with a support member;
Figure 5 is an enlarged cross-sectional detail view illustrating another handle arrangement, the handle having a spigot associated with a support member constituting a core, with a tubular sleeve pivoting around the core; and
Figure 6 is an enlarged cross-sectional detail view illustrating a further handle arrangement, this arrangement having a tubular sleeve pivoting about two cores and a screw extending between the cores within the sleeve acting as a tensile member.

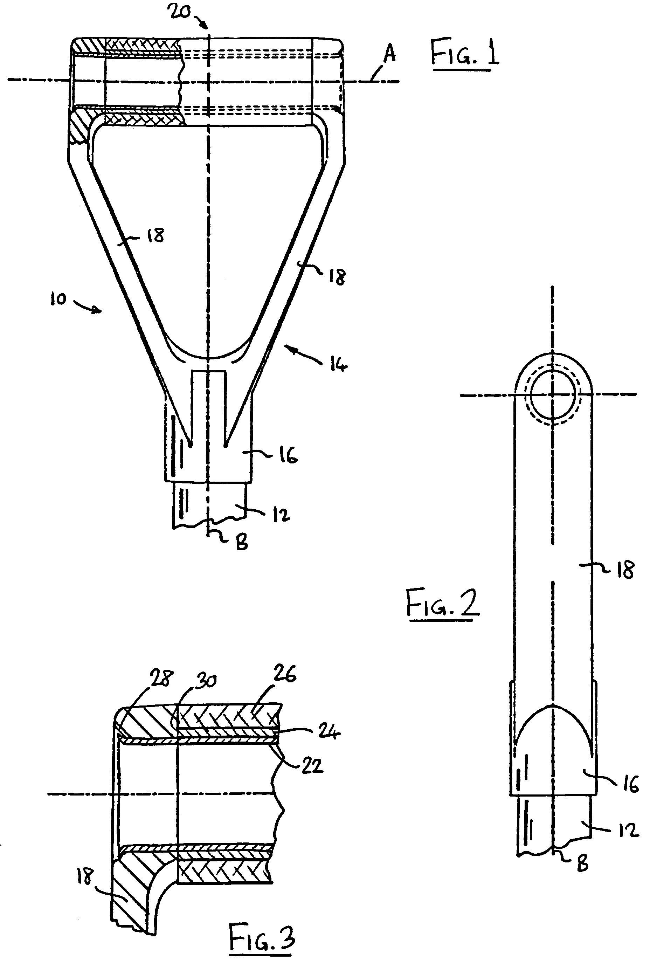

Referring firstly to Figures 1 and 2, a digging tool 10 comprises an elongate cylindrical shaft 12 having a handle 14 situated at its upper end.

A connecting means in the form of a sleeve 16 is integral with the handle 14. The sleeve 16 is generally tubular to define a cylindrical socket within which the uppermost portion of the shaft 12 is received. The shaft 12 may be retained in the socket by adhesive bonding, mechanical fixings such as rivets or screws, friction, or by a combination of any of these means. However, to reduce complexity, it is preferred that the shaft is simply force-fitted into the socket; for this purpose, the socket may have inwardly-facing projections creating an interference fit with the shaft 12.

Above the sleeve 16, the handle 14 divides into two support members 18 which splay apart in a Y-shank formation. A hand grip 20 spans the gap between the support members 18 at their upper ends, with its axis *A* oriented perpendicularly with respect to the common axis *B* of the shaft 12 and sleeve 16. Thus, the hand grip 20 completes a generally D-shaped handle of familiar appearance.

In the embodiment illustrated in Figures 1 to 3, the hand grip 20 comprises a substantially tubular core 22 of aluminium although steel or other materials could also be used. The core 22 is surrounded by a close-fitting sleeve 24 of expanded plastics material, which in turn is surrounded by a tube 26 of foam rubber, preferably neoprene. The sleeve 24 is a sliding fit around the core 22 and so can pivot freely about the axis *A* of the hand grip.

The internal diameter of the foam rubber tube 26 matches the external diameter of the sleeve 24, so that the tube 26 defines a seamless cushioned layer around the sleeve 24. The foam rubber tube 26 may be bonded to the sleeve 24 using suitable adhesives, or may be held in place simply by friction with the outer surface of the sleeve 24. In either case, the tube 26 may be initially slightly under-size so that it stretches to accommodate the sleeve 24, thereby improving its grip on the sleeve 24.

As best shown in Figure 3, each support member 18 defines an opening 28 which receives a respective end of the tubular core 22. Once inserted into the opening 28, the core 22 is anchored to the support member 18 by expansion of the outer end portion of the core 22 in a peening or upsetting operation. The core 22 is thereby anchored in an immovable manner to each support member 18 and, by acting in tension, prevents the support members 18 from moving apart under the loading of use.

It will be noted that the sleeve 24 has a shoulder 30 at each end, which shoulders 30 bear against the respective support members 18. The sleeve 24 therefore acts in compression to prevent the support members 18 from moving towards one another in use and possibly deforming the foam rubber tube 26.

This invention therefore provides a rigid structure in which deflection of the support members 18 is minimised by the core 22 which acts both in tension and in compression.

The foam rubber material of the tube 26 is of non-uniform density, having a relatively large-celled internal structure for effective cushioning but presenting a relatively small-celled outer surface which maximises wearing qualities. If desired, the outer surface can be substantially impermeable to resist the ingress of sweat or other moisture into the internal cellular structure, but alternatively can be designed with a degree of permeability to soak up such moisture and thus to reduce still further the possibility of slippage.

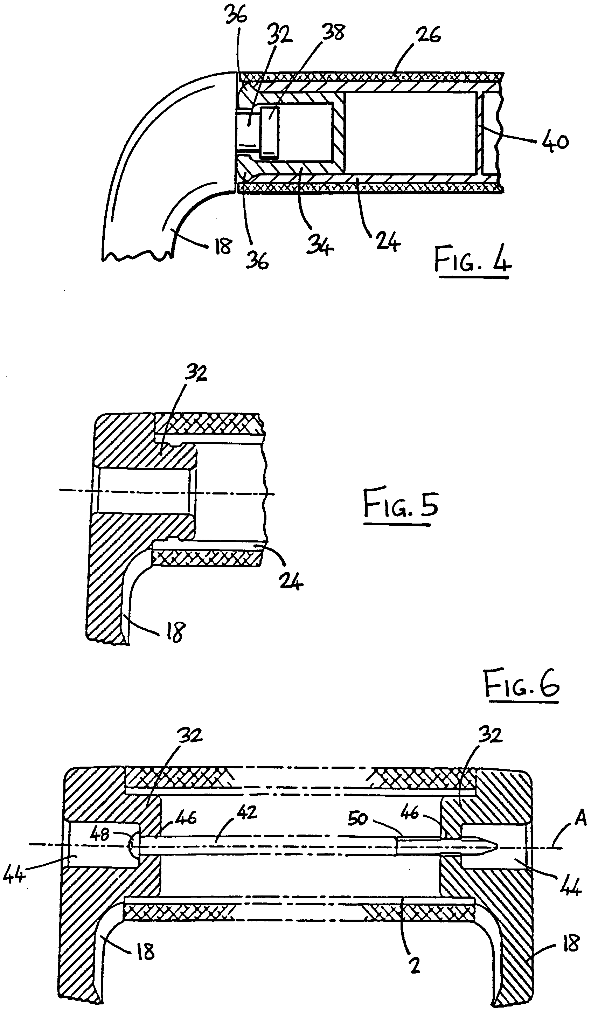

Referring now to Figure 4, this drawing illustrates a different arrangement in which the sleeve 24 is a gas injection moulding of plastics material and is attached to the support member 18 by engagement with a spigot 32 moulded integrally with the support member 18. For this purpose, the open end of the sleeve 24 accommodates a collet 34 which is a separate plastics moulding pushed into the sleeve 24. The collet 34 has a plurality of angularly-spaced inwardly-extending fingers 36 at its open end which engage with the spigot 32 in a snap-fit interlocking manner, the fingers 36 deforming around an expanded head portion 38 of the spigot 32 as the respective parts are pushed together. With reference to the terminology used above in relation to Figures 1 to 3, the spigot 32 thus acts as a core about which the sleeve 24 pivots.

Figure 4 also shows how the gas injection moulded sleeve 24 may be provided with a central transverse web 40 for additional structural strength.

In a broadly similar alternative arrangement as shown in Figure 5, the sleeve 24 again pivots about a spigot 32 formed integrally with the support member 18, the spigot 32 being received within an open end of the sleeve 24. Further, interlocking formations are employed for axial location of the sleeve 24 with respect to the support member 18. However, in this arrangement, the interlocking formations are an annular groove in the spigot 32 and a complementary annular ridge near the open end of the sleeve 24.

It will be noted that, in the embodiments shown in Figures 4 and 5, the sleeve 24 acts both in tension and in compression to minimise deflection of the support members 18.

Referring finally to Figure 6, the arrangement therein is akin to those illustrated in Figures 4 and 5 in that a tubular sleeve 24 is supported by spigots 32 formed integrally with the support members 18. However, the interlocking formations of the embodiments illustrated in Figures 4 and 5 are replaced by a long screw 42 which preferably extends along the pivot axis *A* of the hand grip as shown, although this central or axial positioning is not essential. The screw 42 connects the two support members 18 and so acts as a tensile member separate from the sleeve 24. Deflection of the support members 18 is resisted by compression of the sleeve 24 and by tension of the screw 42.

In the embodiment illustrated in Figure 6, the spigots 32 are hollow, each having an inwardly-extending recess 44 communicating with a hole 46 at the base of the recess 44. The recesses 44 and the holes 46 extend along the pivot axis *A* and are symmetrical about that axis. The screw 42 passes through the holes 46, its head 48 engaging with the bottom of one recess 44 and its threaded end 50 engaging within the hole 46 associated with the other recess 44. The recesses 46 help to conceal the screw 42 and may be provided with plugs or caps if desired.

For simplicity of manufacture, it is preferred that the holes 46 are unthreaded and that the screw 42 has a self-tapping thread which cuts a female thread in an appropriate one of the holes 46. However, if desired, one of the holes 46 could be formed with a female thread, ready to accept a standard screw.

Many variations are possible without departing from the inventive concept. For example, any suitable materials may be used for the various components of the handle, as bound by cost and performance requirements. Structural modifications are also entirely possible; for instance, the interlocking formations may comprise a groove in a female pivot member and a complementary ridge in a male pivot member, the arrangement being dictated by manufacturing considerations. A further modification contemplates crimping of a metal sleeve around a spigot serving as a core, the crimping serving as axial location of the sleeve with respect to the core.

Indeed, the present invention may be embodied in a wide variety of specific forms without departing from the essential attributes thereof and, accordingly, reference should be made to the appended claims rather than to the foregoing specification as indicating the scope of the invention.

## Claims

1. A handle (14) for a digging tool (10) of the type comprising an elongate shaft (12) having a head at one end and a handle (14) at the other end, the handle (14) comprising at least one support member (18), a core (32) supported by the support member (18) and a tubular rigid sleeve (24) pivotable about the core (32) about a pivot axis (A) oriented transversely with respect to the shaft (12), characterised in that the sleeve (24) has a resilient gripping surface (26) and is axially located with respect to the core (22), the sleeve (24) having an interlocking formation (36) adapted to interlock with a complementary interlocking formation (38) on the core (32).

2. A handle (14) according to claim 1, wherein the interlocking formations (36, 38) are adapted to allow snap-fit interconnection of the sleeve (24) and the core (32).

3. A handle (14) according to claim 1 or claim 2, and having first and second cores (32), each core (32) being a spigot (32) associated with a respective one of first and second support members (18), wherein the sleeve (24) is axially located with respect to each spigot (32).

4. A handle (14) for a digging tool (10) of the type comprising an elongate shaft (12) having a head at one end and a handle (14) at the other end, the handle (14) comprising first and second spaced support members (18) connected by and supporting a core (22), and a tubular rigid sleeve (24) pivotable about the core (22) about a pivot axis (A) oriented transversely with respect to the shaft (12), characterised in that the sleeve (24) has a resilient gripping surface (26) and in that the core (22) is axially located with respect to the first and second spaced support members (18), the core (22) acting in tension to prevent the support members (18) separating from one another.

5. A handle (14) for a digging tool (10) of the type comprising an elongate shaft (12) having a head at one end and a handle (14) at the other end, the handle (14) comprising first and second spaced support members (18) and a tubular rigid sleeve (24) pivotable about a pivot axis (A) oriented transversely with respect to the shaft (12), characterised in that the handle (14) comprises first and second cores (32), each core (32) being associated with a respective one of the first and second support members (18), in that the sleeve (24) is pivotable about the cores (32), in that the sleeve (24) has a resilient gripping surface (26) and in that the cores (32) are connected by a tensile member (42) acting in tension to prevent the support members (18) separating from one another.

6. A handle (14) according to claim 4 or claim 5, wherein the sleeve (24) is axially located with respect to the core (22, 32).

7. A handle (14) according to any preceding claim, wherein respective ends of the sleeve (24) bear against first and second support members (18), the sleeve (24) acting in compression to separate the support members (18).

8. A handle (14) according to any preceding claim, wherein the or each core (32) is integral with the or each support member (18).

9. A handle (14) according to any of claims 1 to 7, wherein the or each core (22) is attached to the or each support member (18).

10. A handle (14) according to claim 9, wherein the or each core (22) is received in an opening (28) in the or each support member (18).

11. A handle (14) according to claim 9, wherein the or each core (22) is tubular and receives a male portion of the support member (18).

12. A handle (14) according to any of claims 9 to 11, wherein the or each core (22) is attached to the or each support member (18) by crimping, upsetting, peening or other plastic deformation of the core (22).

13. A handle (14) according to any of claims 9 to 12, wherein the or each core (22) is in fixed relation to the or each support member (18).

14. A handle (14) according to any preceding claim, wherein the gripping surface (26) is integral with the sleeve (24), the sleeve (24) having non-uniform rigidity being relatively rigid inwardly towards the core (22) and being relatively flexible outwardly to define the resilient gripping surface (26).

15. A handle (14) according to any of claims 1 to 13, wherein the gripping surface (26) is defined by a resilient layer (26) bonded to or otherwise fitted to the sleeve (24).

16. A handle (14) according to claim 15, wherein the resilient layer (26) is a layer of foam rubber or plastics material of non-uniform density, having a relatively large-celled internal structure and a relatively small-celled outer surface region.

17. A digging tool (10) fitted with or integral with a handle (14) as defined in any preceding claim.

## Patentansprüche

1. Handgriff (14) für ein Grabegerät (10), mit mindestens einem Halter (18), einem von ihm getragenen Kern (32) und einer rohrförmigen, festen, um den Kern (32) drehbaren Hülse (24), **dadurch gekennzeichnet**, daß die Hülse (24) eine nachgebend, griffige Oberfläche (26) aufweist, und in bezug auf den Kern (32) axial angeordnet ist, und die ferner eine Kopplungsausformung (36) besitzt, die so ausgebildet ist, daß sie einen ineinandergreifenden Wirkeingriff mit einer komplementären Kopplungsausformung (38) am Kern (32) bringbar ist.

2. Handgriff (14) nach Anspruch 1, **dadurch gekennzeichnet**, daß die Kopplungsausformungen (36, 38) so ausgebildet sind, daß sie eine Schnappverbindung zwischen Hülse (24) und dem Kern (32) ermöglichen.

3. Handgriff (14) nach Anspruch 1 oder 2, **dadurch gekennzeichnet**, daß er einen ersten und einen zweiten Kern (32) besitzt, wobei jeder Kern (32) als Zapfen (32) ausgebildet ist, der jeweils mit einem zugehörigen, von ersten und zweiten Halter-Teilen (18) zugeordnet ist, wobei die Hülse (24) axial in bezug auf jeden Zapfen (32) angeordnet ist.

4. Handgriff (14) für ein Grabegerät (10), mit ersten und zweiten beabstandet angeordneten Halte-Teilen (18), die mittels eines Kerns (22) miteinander verbunden sind und von ihm getragen werden, und mit einer rohrförmigen festen, um den Kern (22) drehbaren Hülse (24), **dadurch gekennzeichnet**, daß die Hülse (24) eine nachgebend griffige Oberfläche (26) besitzt, und daß der Kern (22) axial in bezug auf die ersten und zweiten beabstandet angeordneten Halter-Teile (18) angeordnet ist, wobei der Kern eine Spannung bewirkt um zu verhindern, daß die Halter-Teile (18) voneinander getrennt werden.

5. Handgriff (14) für ein Grabegerät (10) mit ersten und zweiten beabstandet angeordneten Halter-Teilen (18) und einer rohrförmigen drehbaren festen Hülse (24), **dadurch gekennzeichnet**, daß der Handgriff (14) erste und zweite Kerne (32) aufweist, wobei jeder Kern (32) jeweils einem der ersten und zweiten Halter-Teile (18) zugeordnet ist, sowie daß die Hülse (24) drehbar um die Kerne (32) ist, und dadurch, daß die Hülse (24) eine nachgebend griffige Oberfläche (26) besitzt sowie dadurch, daß die Kerne (32) mittels eines spannbaren Teiles (42) verbunden sind, die eine Spannung ausüben, um zu verhindern, daß die Halter-Teile (18) voneinander getrennt werden.

6. Handgriff (14) nach Anspruch 4 oder 5, **dadurch gekennzeichnet**, daß die Hülse (24) axial in bezug auf die Kerne (22, 32) ausgebildet ist.

7. Handgriff (14) nach einem der vorangegangenen Ansprüche, **dadurch gekennzeichnet**, daß die Enden der Hülse (24) jeweils gegen die zugehörigen ersten und zweiten Halter-Teile (18) drücken, wobei die Hülse (24) kompressiv wirkt, um die Halter-Teile (18) auseinander zu halten.

8. Handgriff (14) nach einem der vorangegangenen Ansprüche, **dadurch gekennzeichnet**, daß jeder Kern (32) mit dem zugehörigen Halter-Teil (18) einstückig ausgebildet ist.

9. Handgriff (14) nach einem der Ansprüche 1 bis 7, **dadurch gekennzeichnet**, daß jeder Kern (32) jeweils mit dem zugehörigen Halter-Teil (18) verbunden ist.

10. Handgriff (14) nach Anspruch 9, **dadurch gekennzeichnet**, daß jeder Kern (22) in einer entsprechenden Öffnung (28) in dem zugehörigen Halter-Teil (18) aufgenommen ist.

11. Handgriff (14) nach Anspruch 9, **dadurch gekennzeichnet**, daß jeder Kern (22) rohrförmig ausgebildet ist und einen hervorstehenden Teil des zugehörigen Halter-Teiles (18) aufnimmt.

12. Handgriff (14) nach einem der Ansprüche 9 bis 11. **dadurch gekennzeichnet**, daß jeder Kern (22) jeweils mit dem zugehörigen Halter-Teil (18) durch Kröpfen, Stauchen, Hämmern oder durch andere plastische Deformationen des Kernes (22) verbunden ist.

13. Handgriff (14) nach einem der Ansprüche 9 bis 12, **dadurch gekennzeichnet**, daß jeder Kern (22) in einer festen Beziehung zu dem jeweils zugeordneten Halter-Teil (18) steht.

14. Handgriff (14) nach einem der vorangehenden Ansprüche, **dadurch gekennzeichnet**, daß die griffige Oberfläche (26) einstückig mit der Hülse (24) ausgebildet ist, wobei die Hülse (24) eine ungleichförmige Festigkeit aufweist, derart, daß sie nach innen zu dem Kern (22) relativ fest ist und nach außen hin zum Vorgeben der nachgebend griffigen Oberfläche (26) relativ flexibel ist.

15. Handgriff (14) nach einem der Ansprüche 1 bis 13, **dadurch gekennzeichnet**, daß die griffige Oberfläche (26) durch eine nachgebende Schicht (26) vorgegeben ist, die mit der Hülse (24) verbunden oder auf andere Weise daran befestigt ist.

16. Handgriff (14) nach Anspruch 15, **dadurch gekennzeichnet**, daß die nachgebende Schicht (26) eine Schicht aus Schaumgummi oder einem Kunststoffmaterial von ungleichförmiger Dichte ist, das eine relativ großzellige interne Struktur und eine relativ kleinzellige äußere Oberflächenregion besitzt.

17. Grabegerät (10), daß mit einem Handgriff (14) gemäß einem der vorangehenden Ansprüche versehen ist oder damit einstückig verbunden ist.

## Revendications

1. Manche (14) pour un outil de creusement (10), le manche (14) comprenant au moins un élément de support (18), un noyau (32) maintenu par l'élément de support (18) et un manchon tubulaire rigide (24) pouvant pivoter autour du noyau (32), caractérisé en ce que le manchon (24) comporte une surface de préhension élastique (26) et est disposé axialement par rapport au noyau (22), le manchon (24) ayant une formation d'enclenchement (36) destinée à s'enclencher avec une formation d'enclenchement complémentaire (38) sur le noyau (32).

2. Manche (14) selon la revendication 1, dans lequel les formations d'enclenchement (36, 38) sont destinées à permettre une interconnexion encliquetable du manchon (24) et du noyau (32).

3. Manche (14) selon la revendication 1 ou la revendication 2, et ayant des premier et second noyaux (32), chaque noyau (32) étant un goujon associé à un élément respectif des premier et second éléments de support (18), dans lequel le manchon (24) est disposé axialement par rapport à chaque goujon (32).

4. Manche (14) pour un outil de creusement (10), le manche comprenant des premier et second éléments de support espacés l'un de l'autre (18) reliés par un noyau (22) et supportant ce noyau, et un manchon tubulaire rigide (24) pouvant pivoter autour du noyau (22), caractérisé en ce que le manchon (24) comporte une surface de préhension élastique (26) et en ce que le noyau (22) est disposé axialement par rapport aux premier et second éléments de support espacés l'un de l'autre (18), le noyau (22) travaillant à l'extension pour empêcher que les éléments de support ne se séparent l'un de l'autre.

5. Manche (14) pour un outil de creusement (10), le manche (14) comprenant des premier et second éléments de support espacés l'un de l'autre (18) et un manchon tubulaire rigide pouvant pivoter (24), caractérisé en ce que le manche (14) comprend des premier et second noyaux (32), chaque noyau (32) étant associé à un élément respectif des premier et second éléments de support (18), en ce que le manchon (24) peut pivoter autour des noyaux (32), en ce que le manchon (24) comporte une surface de préhension élastique (24) et en ce que les noyaux (32) sont reliés par un élément de traction (42) travaillant à l'extension pour empêcher que les éléments de support (18) ne se séparent l'un de l'autre.

6. Manche (14) selon la revendication 4 ou la revendication 5, dans lequel le manchon (24) est disposé axialement par rapport au noyau (22, 32).

7. Manche (14) selon l'une quelconque des revendications précédentes, dans lequel les extrémités respectives du manchon (24) appuient contre les premier et second éléments de support (18), le manchon (24) travaillant à la compression pour séparer les éléments de support (18).

8. Manche (14) selon l'une quelconque des revendications précédentes, dans lequel le noyau ou chaque noyau (32) est en une pièce avec l'élément de support ou chaque élément de support (18).

9. Manche (14) selon l'une quelconque des revendications 1 à 7, dans lequel le noyau ou chaque noyau (22) est attaché à l'élément de support ou à chaque élément de support (18).

10. Manche (14) selon la revendication 9, dans lequel le noyau ou chaque noyau (22) est reçu dans une ouverture (28) ménagée dans l'élément de support ou chaque élément de support (18).

11. Manche (14) selon la revendication 9, dans lequel le noyau ou chaque noyau (22) est tubulaire et reçoit une partie mâle de l'élément de support (18).

12. Manche (14) selon l'une quelconque des revendications 9 à 11, dans lequel le noyau ou chaque noyau (22) est attaché à l'élément de support ou à chaque élément de support (18) par sertissage, refoulement, martelage ou autre déformation plastique du noyau (22).

13. Manche (14) selon l'une quelconque des revendications 9 à 12, dans lequel le noyau ou chaque noyau (22) est en relation fixe avec l'élément de support ou chaque élément de support (18).

14. Manche (14) selon l'une quelconque des revendications précédentes, dans lequel la surface de préhension (26) est en une pièce avec le manchon (24), le manchon (24) ayant une rigidité non-uniforme, étant relativement rigide vers l'intérieur dans la direction du noyau (22) et relativement flexible vers l'extérieur pour définir la surface de préhension élastique (26).

15. Manche (14) selon l'une quelconque des revendications 1 à 12, dans lequel la surface de préhension (26) est définie par une couche élastique (26) liée au manchon (24) ou montée d'une autre manière sur celui-ci.

16. Manche (14) selon la revendication (15), dans lequel la couche élastique (26) est une couche de caoutchouc mousse ou de matériau en plastique de densité non-uniforme, ayant une structure interne à cellules relativement grandes et une zone superficielle extérieure à cellules relativement petites.

17. Outil de creusement (10) ayant un manche (14) ou en une pièce avec le manche tel que défini dans l'une quelconque des revendications précédentes.
